# FASCICULE DE BREVET EUROPEEN

(11) **EP 1 574 427 B1**
(45) Date de publication et mention de la délivrance du brevet: **24.01.2007**
(21) Numéro de dépôt: 05290514.8
(22) Date de dépôt: 08.03.2005
(51) Int. Cl.: B64C 25/60

(54) **Atterrisseur à réservoir de gaz et procédés de maintenance d'un tel atterrisseur**
Fahrwerk mit einem Gasbehälter und Wartungsverfahren dafür
Gas tank type landing gear and its maintenance methods

(30) Priorité: 12.03.2004 FR 0402570
(43) Date de publication de la demande: 14.09.2005
(73) Titulaire: MESSIER-DOWTY S.A., 78140 Velizy Villacoublay (FR)
(72) Inventeur: Courtois, Maud, 75005 Paris (FR); Gautrain, Sébastien, 78350 Jouy-en-Josas (FR); Gillet, Marc, 92130 Issy-les-Moulineaux (FR); Martinez, Laurent, 92129 Montrouge (FR)
(74) Mandataire: Parzy, Benjamin Alain

(56) Documents cités:
- EP-A- 0 546 902
- FR-A- 2 686 857
- GB-A- 430 337
- GB-A- 637 360
- US-A- 3 889 904

## Description

L'invention concerne un atterrisseur à réservoir de gaz, ainsi que des procédés de maintenance d'un tel atterrisseur.

### ARRIERE-PLAN DE L'INVENTION

On connaît des atterrisseurs comportant un amortisseur avec un premier élément et un second élément coulissant relativement l'un à l'autre, lesdits éléments coulissants définissant un volume interne qui est partiellement rempli de fluide hydraulique de façon à réserver à l'extrémité d'un des éléments coulissants une chambre remplie de gaz sous pression.

En général, l'amortisseur comporte un diaphragme solidaire de l'un des éléments et présentant des orifices de laminage par lequel le fluide hydraulique est forcé lors de l'enfoncement de l'amortisseur. Ce laminage provoque une dissipation d'une partie de l'énergie cinétique de l'aéronef ayant conduit à l'enfoncement de l'amortisseur.

Une autre partie de l'énergie cinétique est absorbée par la compression du gaz contenu dans la chambre, du fait de la diminution de volume de ladite chambre lors de l'enfoncement.

Dans le cas des atterrisseurs situés sous le fuselage de l'aéronef, il est important de s'assurer que ceux-ci ne peuvent rompre leurs attaches risquant alors de blesser des passagers ou d'endommager des réservoirs de carburant.

A cet effet, il est connu de limiter l'effort dans l'amortisseur en prévoyant des parties structurales susceptibles de flamber lorsque l'effort dans l'amortisseur dépasse un seuil prédéterminé. Un tel amortisseur est connu de EP-0546902. Mais ces systèmes sont délicats à concevoir et imposent un remplacement des parties structurales flambées avant tout redécollage de l'aéronef, ce qui perturbe la régularité de la ligne assurée par l'aéronef et se révèle problématique lorsque l'aéronef se trouve sur un aéroport éloigné et isolé.

### OBJET DE L'INVENTION

L'invention a pour objet un atterrisseur muni d'une sécurité permettant de limiter l'effort dans l'amortisseur, ne nécessitant pas une intervention immédiate de maintenance après déclenchement de la sécurité.

### BREVE DESCRIPTION DE L'INVENTION

On propose un atterrisseur (voir revendication 1) comportant un amortisseur avec un premier élément et un second élément coulissant relativement l'un à l'autre, lesdits éléments coulissants définissant un volume interne qui est partiellement rempli de fluide hydraulique de façon à réserver à l'extrémité d'un des éléments coulissants une première chambre remplie de gaz sous pression. Selon l'invention, un réservoir rempli de gaz sous pression est logé dans ladite extrémité et est pourvu d'un organe d'obturation qui se trouve initialement dans un état fermé et qui est apte à se placer dans un état ouvert stable lorsque la pression régnant dans la première chambre dépasse la pression régnant dans le réservoir d'un seuil prédéterminé.

Ainsi, lorsque l'organe d'obturation s'ouvre, la première chambre voit son volume augmenté du volume du réservoir, ce qui diminue la pente de la courbe d'effort généré par l'amortisseur lors de son enfoncement. La réduction de la pente de la courbe d'effort permet une réduction concomitante de l'effort maximal généré par l'amortisseur, qui se trouve ainsi limité. L'intégrité de l'atterrisseur est ainsi sauvegardée.

L'aéronef peut alors continuer à être utilisé après l'ouverture de l'organe d'obturation (moyennant une éventuelle limitation des conditions d'utilisation de l'aéronef), aucune partie structurale de l'atterrisseur n'ayant été endommagée. L'opération de maintenance visant à remettre le réservoir dans l'état initial peut ainsi être différée pour être effectuée lorsque l'aéronef est revenu à sa base.

La stabilité de la position ouverte permet de détecter facilement le déclenchement de la sécurité selon l'invention en mesurant la pression régnant dans la première chambre qui, pour un enfoncement donné, diffère selon que l'organe d'obturation est fermé ou ouvert, ou, en variante, en mesurant l'enfoncement de l'amortisseur qui, pour une pression donnée dans la première chambre, diffère selon que l'organe d'obturation est fermé ou ouvert.

Selon un mode préféré de réalisation de l'invention, l'organe d'obturation comprend une pastille soumise à l'action antagoniste de la pression régnant dans la première chambre et la pression régnant dans le réservoir, la pastille étant prévue pour se briser lorsque la pression régnant dans la première chambre dépasse la pression régnant dans le réservoir dudit seuil.

Avantageusement, la pastille est en appui circonférentiel sur une bague à collerette rapportée dans un alésage étagé ménagé dans la paroi du réservoir. Selon une variante de réalisation la pastille a un diamètre externe qui est soudé à la bague à collerette. De préférence, la pastille est maintenue en position par un écrou annulaire.

Toujours selon l'invention, on propose un procédé de maintenance (voir revendication 6) d'un atterrisseur selon l'invention, qui comporte l'étape, après ouverture de l'organe d'obturation, de réinitialiser l'organe d'obturation alors que le réservoir est en place dans l'extrémité de l'élément coulissant associé.

Selon un mode particulier de mise en oeuvre (voir revendication 9) l'étape de réinitialisation consiste à remplacer l'organe d'obturation par un organe d'obturation dans l'état fermé initial.

Dans ce procédé appliqué à un atterrisseur dont le réservoir est équipé d'un organe d'obturation à pastille, la réinitialisation consiste à remplacer au moins la pastille brisée par une pastille non brisée.

Encore selon l'invention, on propose un procédé de maintenance d'un atterrisseur selon l'invention, qui comporte l'étape, après ouverture de l'organe d'obturation, de remplacer le réservoir par un réservoir préalablement rempli de gaz sous pression et dont l'organe d'obturation est dans l'état fermé initial.

### BREVE DESCRIPTION DES DESSINS

L'invention sera mieux comprise à la lumière de la description qui suit en référence aux figures des dessins annexés parmi lesquelles :
- la figure 1 est une vue en coupe longitudinale d'un atterrisseur selon l'invention ;
- la figure 2 est une vue agrandie de la figure 1, au niveau de la bonbonne.

### DESCRIPTION DETAILLEE DE L'INVENTION

L'invention est ici appliquée à un atterrisseur de type direct avec amortisseur intégré, monté sous le fuselage d'un aéronef. Il est évident que l'invention n'est pas limitée à ce type d'atterrisseur, mais est également applicable à des atterrisseurs à amortisseur externe, non forcément montés sous le fuselage.

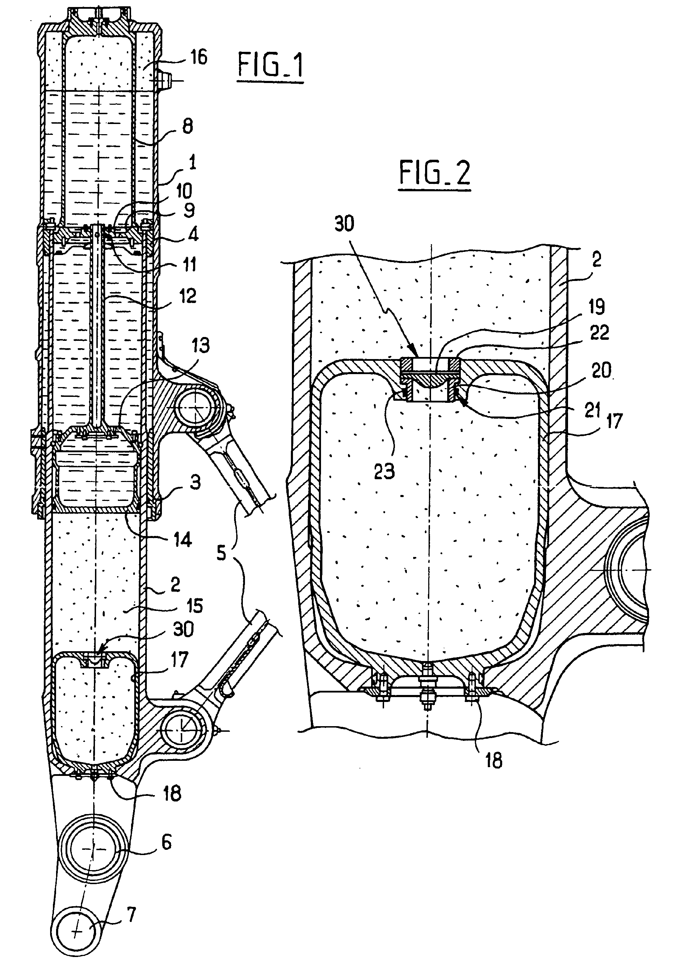

En référence à la figure 1, et de façon connue en soi, l'atterrisseur comporte un caisson 1 relié à l'aéronef, dans lequel une tige 2 est montée pour coulisser à étanchéité. A cet effet, le caisson 1 porte en partie basse un palier inférieur 3 ayant une surface interne en contact avec la tige 2, et la tige 2 porte en partie haute un palier supérieur 4 ayant une surface externe en contact avec le caisson 1.

Un compas 5 (dont on voit le début des branches) est monté entre le caisson 1 et la tige 2 pour empêcher toute rotation de la tige 2 par rapport au caisson 1.

A son extrémité inférieure, la tige 2 forme une fourche dont les branches comportent des alésages 6 destinés à recevoir l'axe d'articulation d'un balancier portant des roues (non représenté). Les branches de la fourche s'étendent au delà des alésages 6 pour présenter des alésages 7 destinés à recevoir l'extrémité de barres de freinage (non représentées) arrêtant angulairement les couronnes de freinage qui équipent les roues portées par le balancier.

Un tube ajouré 8 fixé en haut du caisson 1 s'étend dans celui-ci et porte à son extrémité inférieure un diaphragme 9 ayant une surface externe qui coulisse à étanchéité sur la surface interne de la tige 2.

Le diaphragme 9 comporte des orifices de laminage 10, et un orifice central 11 dans lequel s'étend une aiguille de laminage 12 solidaire de la tige 2 par l'intermédiaire d'un support 13 rapporté dans la tige 2 au moyen d'un jonc et comportant des orifices de passage.

Un piston séparateur 14 est monté dans la tige 2 pour y coulisser à étanchéité sous le support 13 qui forme une butée supérieure pour le piston séparateur 14.

Lorsque l'atterrisseur est détendu, comme illustré, du fluide hydraulique (symbolisé par des traits horizontaux) remplit entièrement le volume s'étendant entre le piston séparateur 14 et le diaphragme 9, ainsi que le volume annulaire s'étendant entre la paroi externe de la tige 2 et la paroi interne du caisson 1 entre les paliers 3,4. Le fluide hydraulique remplit partiellement le volume s'étendant au dessus du diaphragme 9.

Le reste du volume interne de l'atterrisseur définit une première chambre 15 qui s'étend sous le piston séparateur 14, et une seconde chambre 16 formée par la partie du volume au dessus du diaphragme 9 non rempli de fluide hydraulique.

La première chambre 15 est remplie d'azote (symbolisée par des points) à une pression de l'ordre 120 bars, tandis que la seconde chambre 16 est remplie d'azote à une pression de l'ordre de 20 bars.

Selon l'invention, un réservoir 17 est disposé dans l'extrémité de la tige 2 en étant fixé au fond de la tige 2 par des boulons 18. Le réservoir 17 est fermé par un organe d'obturation 30 et est rempli d'azote à une pression de 90 bars.

Comme cela est plus visible à la figure 2, l'organe d'obturation 30 comporte une pastille 19, ici en alliage de nickel, qui est en appui circonférenciel sur une bague à collerette 20 engagée dans un alésage étagé 21 ménagé dans la paroi du réservoir 17, un cordon de soudure s'étendant ici sur le diamètre externe de la pastille 19 pour relier cette dernière à la bague à collerette 20. La pastille 19 est maintenue en position au moyen d'un écrou annulaire 22. Le serrage de l'écrou annulaire 22 empêche toute fuite d'azote entre la pastille 19 et la bague à collerette 20. Un joint d'étanchéité 23 logé dans une gorge annulaire s'étend contre la bague à collerette 20 pour empêcher toute fuite d'azote entre la bague à collerette 20 et la paroi du réservoir 17.

Le fonctionnement de l'amortisseur est le suivant. Lors d'un atterrissage, la tige 2 est forcée à s'enfoncer dans le caisson 1. Ce faisant, le fluide hydraulique est forcé à passer au travers des orifices de laminage du diaphragme 9. Ce laminage provoque une dissipation d'énergie par frottement interne dans le fluide hydraulique. La quantité de fluide hydraulique passant au travers du diaphragme 9 diminue d'autant le volume de la seconde chambre 16, ce qui provoque la compression de l'azote qui y est contenu et en augmente sa pression.

Il est à noter que le fluide se trouvant au dessus du diaphragme 9 voit sa pression imposée par la pression régnant dans la seconde chambre 16. Quant au fluide se trouvant au dessous du diaphragme 9, sa pression est imposée par la résistance opposée au passage du fluide hydraulique au travers des orifices de laminage du diaphragme 9. Quand cette pression atteint la pression de gonflage de la première chambre 15, le piston séparateur 14 se déplace alors, provoquant la compression du gaz de la première chambre 15.

L'azote contenu dans les chambres 15,16 se comporte comme un ressort dont l'effort suit une loi sensiblement polytropique.

Puis la tige 2 trouve une position d'équilibre stable dans le caisson 1 sous l'effet de la partie du poids de l'aéronef auquel l'atterrisseur est soumis. Dans la position d'équilibre, le fluide hydraulique et l'azote contenu dans les deux chambres 15, 16 sont à la même pression.

Dans certaines circonstances, par exemple en cas de mauvais chargement de l'aéronef, ou encore en cas de défaillance des atterrisseurs de voilure lors d'un atterrissage, l'atterrisseur central peut avoir à supporter une partie importante du poids de l'aéronef, dépassant les limites pour lesquelles il a été conçu.

Pour éviter que l'effort exercé sur l'atterrisseur ne dépasse un niveau dangereux, la pastille 19 est conçue pour se briser lorsque la différence entre la pression régnant dans la première chambre 15 et la pression régnant dans le réservoir 17 atteint le seuil de 180 bars. En pratique ici, la pastille 19 est conçue pour rompre en formant des pétales, tout en restant en une seule pièce.

Une fois la pastille 19 brisée, le volume de la première chambre 15 se trouve instantanément augmenté du volume du réservoir 17, ce qui diminue la pente de la courbe d'effort généré par l'amortisseur, et, partant, l'effort maximal que peut développer l'atterrisseur.

Le réservoir 17 muni de l'organe d'obturation 30 à seuil constitue ainsi un moyen simple de sécurité, permettant de limiter les efforts maximaux développés par l'atterrisseur.

Si la pastille 19 a été brisée, la pression régnant dans la première chambre 15 est plus basse que celle qui régnerait dans ladite chambre si la pastille 19 n'avait pas été brisée. On peut ainsi détecter facilement si la pastille 19 a été brisée en mesurant la pression dans la première chambre 15.

Cette baisse de pression, si elle limite éventuellement les conditions d'utilisation de l'aéronef (notamment vis à vis de la masse maximale ou de la plage de centrage), n'empêche néanmoins pas l'utilisation commerciale de l'aéronef qui peut continuer à assurer son service en attendant un retour vers une base équipée afin de subir une opération de maintenance destinée à réinitialiser l'amortisseur.

Selon l'invention, l'opération de maintenance consiste à séparer la tige 2 du caisson 1, et à remplacer l'ensemble bague 20/pastille 19 brisée par un ensemble similaire comportant une pastille non brisée, le réservoir 17 restant en place dans le fond de la tige 2. Il reste alors à replacer la tige 2 dans le caisson 1, et à remplir l'atterrisseur de fluide hydraulique et gonfler la première chambre 15, la deuxième chambre 16, ainsi que le réservoir 17 (via une valve de gonflage non représentée et accessible de l'extérieur).

En variante, l'opération de maintenance comporte l'étape de remplacer le réservoir 17 par un réservoir préalablement rempli de gaz sous pression et dont l'organe d'obturation est dans l'état fermé initial.

L'invention n'est pas limitée aux modalités particulières qui viennent d'être décrites, mais bien au contraire englobe toute variante entrant dans le cadre de l'invention tel que défini par les revendications.

En particulier, bien que l'organe d'obturation à seuil ait été illustré comme comportant un élément brisable, l'organe d'obturation pourra être de tout autre type, du moment qu'il présente un état initial fermé et un état ouvert stable dans lequel il se place sous l'effet du dépassement du seuil, par exemple une valve de surpression bistable. La réinitialisation de l'organe d'obturation consiste alors à provoquer la transition inverse de l'état ouvert à l'état fermé soit en agissant sur l'organe d'obturation pour le faire basculer vers l'état initial fermé, soit en remplaçant certaines parties pour le remettre dans l'état initial fermé.

## Revendications

1. Atterrisseur comportant un amortisseur avec un premier élément (1) et un second élément (2) coulissant relativement l'un à l'autre, lesdits éléments coulissants (1,2) définissant un volume interne qui est partiellement rempli de fluide hydraulique de façon à réserver à l'extrémité d'un des éléments coulissants (2) une première chambre (15) remplie de gaz sous pression, **caractérisé en ce qu'**un réservoir (17) rempli de gaz sous pression est logé dans ladite extrémité et est pourvu d'un organe d'obturation (30) qui se trouve initialement dans un état fermé et qui est apte à se placer dans un état ouvert stable lorsque la pression régnant dans la première chambre (15) dépasse la pression régnant dans le réservoir (17) d'un seuil prédéterminé.

2. Atterrisseur selon la revendication 1, **caractérisé en ce que** l'organe d'obturation (30) comprend une pastille (19) soumise à l'action antagoniste de la pression régnant dans la première chambre (15) et la pression régnant dans le réservoir (17), la pastille étant prévue pour se briser lorsque la pression régnant dans la première chambre (15) dépasse la pression régnant dans le réservoir (17) dudit seuil.

3. Atterrisseur selon la revendication 2, **caractérisé en ce que** la pastille (19) est en appui circonférentiel sur une bague à collerette (20) rapportée dans un alésage étagé (21) ménagé dans la paroi du réservoir (17).

4. Atterrisseur selon la revendication 3, **caractérisé en ce que** la pastille (19) a un diamètre externe qui est soudé à la bague à collerette (20).

5. Atterrisseur selon la revendication 3 ou la revendication 4, **caractérisé en ce que** la pastille (19) est maintenue en position par un écrou annulaire (22).

6. Procédé de maintenance d'un atterrisseur selon l'une des revendications 1 à 5, **caractérisé en ce qu'**il comporte l'étape, après ouverture de l'organe d'obturation (30), de réinitialiser l'organe d'obturation (30) alors que le réservoir (17) est en place dans l'extrémité de l'élément coulissant (2) associé.

7. Procédé de maintenance selon la revendication 6, **caractérisé en ce que** l'étape de réinitialisation consiste à remplacer l'organe d'obturation par un organe d'obturation dans l'état fermé initial.

8. Procédé de maintenance selon la revendication 6, appliqué à un atterrisseur selon l'une des revendications 2 à 5, **caractérisé en ce que** l'étape de réinitialisation consiste à remplacer au moins la pastille (19) brisée par une pastille non brisée.

9. Procédé de maintenance d'un atterrisseur selon l'une des revendications 1 à 5, **caractérisé en ce qu'**il comporte l'étape, après ouverture de l'organe d'obturation (30), de remplacer le réservoir (17) par un réservoir préalablement rempli de gaz sous pression dont l'organe d'obturation est dans l'état fermé initial.

## Claims

1. Landing gear including a shock absorber having fist and second elements (1, 2) slidable relative to each other, said slidable elements (1, 2) defining an inside volume which is filled in part with hydraulic fluid so as to leave a first chamber (15) filled with gas under pressure and located at the end of one of the slidable elements (2), the landing gear being **characterized in that** a vessel (17) filled with gas under pressure is housed in said end and is provided with a shutter member (30) that is initially in a closed state and that is suitable for taking up a stable open state when the pressure in the first chamber (15) exceeds the pressure in the vessel (17) by a predetermined threshold amount.

2. Landing gear according to claim 1, **characterized in that** the shutter member (30) comprises a pellet (19) subjected to the opposing action of the pressure in the first chamber (15) and the pressure in the vessel (17), the pellet being designed to break when the pressure in the first chamber (15) exceeds the pressure in the vessel (17) by said threshold amount.

3. Landing gear according to claim 2, **characterized in that** the pellet (19) bears circumferentially against a flanged ring (20) fitted in a stepped bore (21) formed through the wall of the vessel (17).

4. Landing gear according to claim 3, **characterized in that** the pellet (19) has an outside diameter that is welded to the flanged ring (20).

5. Landing gear according to claim 3 or claim 4, **characterized in that** the pellet (19) is held in position by an annular nut (22).

6. A method of maintaining landing gear according to any one of claims 1 to 5, **characterized in that** it includes the step, after the shutter member (30) has opened, of reinitializing the shutter member (30) while the vessel (17) is in place in the end of the associated slidable elements (2).

7. A maintenance method according to claim 6, **characterized in that** the reinitialization step consists in replacing the shutter member by a shutter member in the initial closed state.

8. A maintenance method according to claim 6, applied to landing gear according to any one of claims 2 to 5, **characterized in that** the reinitialization step consists in replacing at least the broken pellet (19) by a non-broken pellet.

9. A method of maintaining landing gear according to any one of claims 1 to 5, **characterized in that** it includes the step, after the shutter member (30) has opened, of replacing the vessel (17) by a vessel that has previously been filled with gas under pressure and having a shutter member that is in the initial closed state.

## Patentansprüche

1. Fahrwerk, umfassend einen Stoßdämpfer mit einem ersten Element (1) und einem zweiten Element (2), die relativ zueinander verschiebbar sind, wobei die verschiebbaren Elemente (1, 2) ein Innenvolumen begrenzen, das teilweise mit Hydraulikfluid gefüllt ist, derart, dass am Ende eines der verschiebbaren Elemente (2) eine erste Kammer (15) zurückbehalten wird, die mit Druckgas gefüllt ist, **dadurch gekennzeichnet, dass** ein Speicher (17), der mit Druckgas gefüllt ist, in dem genannten Ende untergebracht und mit einem Schließelement (30) versehen ist, das sich anfänglich in einem geschlossenen Zustand befindet und dazu geeignet ist, sich in einen stabilen offenen Zustand zu bringen, wenn der in der ersten Kammer (15) herrschende Druck den in dem Speicher (17) herrschenden Druck um einen vorgegebenen Grenzwert überschreitet.

2. Fahrwerk nach Anspruch 1, **dadurch gekennzeichnet, dass** das Schließelement (30) ein Plättchen (19) umfasst, das der Gegenwirkung des in der ersten Kammer (15) herrschenden Druckes und des in dem Speicher (17) herrschenden Druckes ausgesetzt ist, wobei das Plättchen so vorgesehen ist, dass es bricht, wenn der in der ersten Kammer (15) herrschende Druck den in dem Speicher (17) herrschenden Druck um den genannten Grenzwert überschreitet.

3. Fahrwerk nach Anspruch 2, **dadurch gekennzeichnet, dass** das Plättchen (19) entlang dem Umfang an einem Flanschring (20) anliegt, der in einer gestuften Bohrung (21) befestigt ist, die in der Wand des Speichers (17) ausgebildet ist.

4. Fahrwerk nach Anspruch 3, **dadurch gekennzeichnet, dass** das Plättchen (19) einen Außendurchmesser hat, der mit dem Flanschring (20) verschweißt ist.

5. Fahrwerk nach Anspruch 3 oder Anspruch 4, **dadurch gekennzeichnet, dass** das Plättchen (19) durch eine ringförmige Mutter (22) in Position gehalten wird.

6. Verfahren zur Wartung eines Fahrwerks nach einem der Ansprüche 1 bis 5, **dadurch gekennzeichnet, dass** es nach Öffnung des Schließelements (30) den Schritt des Reinitialisierens des Schließelements (30) umfasst, während der Speicher (17) in dem Ende des dazugehörigen verschiebbaren Elements (2) am Platz ist.

7. Wartungsverfahren nach Anspruch 6, **dadurch gekennzeichnet, dass** der Reinitialisierungsschritt darin besteht, dass das Schließelement durch ein sich im geschlossenen Ausgangszustand befindliches Schließelement ersetzt wird.

8. Wartungsverfahren nach Anspruch 6, angewandt an einem Fahrwerk nach einem der Ansprüche 2 bis 5, **dadurch gekennzeichnet, dass** der Reinitialisierungsschritt darin besteht, dass mindestens das zerbrochene Plättchen (19) durch ein nicht zerbrochenes Plättchen ersetzt wird.

9. Wartungsverfahren für ein Fahrwerk nach einem der Ansprüche 1 bis 5, **dadurch gekennzeichnet, dass** es nach Öffnung des Schließelements (30) den Schritt des Ersetzens des Speichers (17) durch einen zuvor mit Druckgas gefüllten Speicher umfasst, dessen Schließelement sich im geschlossenen Ausgangszustand befindet.
